## Europäisches Patentamt

## European Patent Office

## Office européen des brevets

(19)

(11) Veröffentlichungsnummer: **0 182 123**
**B1**

(12)
# EUROPÄISCHE PATENTSCHRIFT

(45) Veröffentlichungstag der Patentschrift:
**27.12.89**

(51) Int. Cl.⁴: **B 60 S 1/34**

(21) Anmeldenummer: **85113360.3**

(22) Anmeldetag: **22.10.85**

(54) **Wischvorrichtung für Scheiben von Fahrzeugen.**

(30) Priorität: **14.11.84 BE 901052**

(43) Veröffentlichungstag der Anmeldung:
**28.05.86 Patentblatt 86/22**

(45) Bekanntmachung des Hinweises auf die Patenterteilung:
**27.12.89 Patentblatt 89/52**

(84) Benannte Vertragsstaaten:
**DE FR IT**

(56) Entgegenhaltungen:
**DE-A-2 215 335**
**DE-A-2 448 981**

(73) Patentinhaber: **Leroy, André, 64 Chaussée de Binche, B-7030 Mons (Saint Symphorien) (BE)**
Patentinhaber: **Flamme, Jean Marie, 22 rue de la Délivrance, B-7980 Beloeil (BE)**

(72) Erfinder: **Leroy, André, 64 Chaussée de Binche, B-7030 Mons (Saint Symphorien) (BE)**
Erfinder: **Flamme, Jean Marie, 22 rue de la Délivrance, B-7980 Beloeil (BE)**

(74) Vertreter: **Voss, Klaus, Dipl.- Ing., Robert- Bosch- Platz 1, D-7016 Gerlingen- Schillerhöhe (DE)**

LIBER, STOCKHOLM 1989

EP 0 182 123 B1

## Beschreibung

Die Erfindung betrifft eine Wischvorrichtung für Scheiben Fahrzeugen, mit wenigstens einem, ein Wischblatt tragenden Wischerarm und einem Antriebsaggregat, das einen vorzugsweise elektrischen Antriebsmotor aufweist, dessen drehende Abtriebsbewegung über ein zum Aggregat gehörendes Pendelgetriebe auf ein mit dem Wischerarm verbundenes Getriebeglied übertragen wird. Der Wischerarm ist fest mit einem Getriebeglied eines räumlichen, aus fünf miteinander gelenkig verbundenen Getriebegliedern bestehenden Mechanismus verbunden, dessen Augenblicksrotationsachse in bezug auf ein Gestell in eine Pendelbewegung versetzt ist. So führt ein den Wischerarm und ein an diesem angeordnetes Wischblatt umfassender Wischhebel eine komplexe hin- und hergehende Bewegung aus, die es ermöglicht, auf einer gegebenen Windschutzscheibe eine bestimmte, mit einer gewissen Freiheit definierte und festgelegte Fläche zu bestreichen, welche bei der Hin- und Rückbewegung identisch bleibt. Der Wischerarm besteht aus zwei durch eine Feder gegen die zu wischende Scheibe vorgespannten, miteinander gelenkig verbundenen Elementen, wobei das eine Element das Wischblatt trägt und das andere Element mit einem Getriebeglied des Fünfgelenks fest verbunden ist.

Bei den meisten bekannten Wischsystemen die solchen Ansprüchen entsprechen, wird ein bestimmtes Element in eine Pendelbewegung versetzt, die mit der Wischbewegung des Wischblatts identisch ist. Der Wischhebel wird dabei durch dieses Element geführt, allerdings mit einem Freiheitsgrad, welcher durch einen Mechanismus gesteuert wird, der eine zusätzliche, mit der Wischbewegung koordinierte Bewegung erzeugt.

Diese bekannten Systeme unterscheiden sich voneinander durch die Art und Weise, wie der Wischhebel geführt wird: Durch eine Kulisse im Falle einer Verschiebungsfreiheit bei einer Anordnung gemäß der französischen Patentschrift FR-A-2 178 683 und durch ein verformbares Parallelogramm im Falle einer Kreisverschiebungsfreiheit bei einer Ausführung gemäß der französischen Patentschrift FR-A-2 178 682 und der belgischen Patentschriften BE-A-879 446, BE-A-891 806 und BE-A-892 029. Bei diesen Systemen wird im allgemeinen die zusätzliche Bewegung durch Übersetzungen mit konstantem oder variablem Übersetzungsverhältnis, je nach dem gewählten System, erzeugt.

Bei der hier vorgeschlagenen Wischvorrichtung nach Anspruch 1 ist der Wischhebel mit einem bestimmten Glied eines räumlichen, den Freiheitsgrad F = 1 aufweisenden Gestänges (Fünfgelenk) fest verbunden. Dieses Fünfgelenk wandelt eine alternierende Rotationsbewegung (Pendelbewegung) in eine komplexe alternierende Bewegung des Wischerarms, wobei die Eingangsbewegung mit der Wischbewegung nie identisch ist. Bevorzugte Merkmale der vorgeschlagenen Wischvorrichtung sind in den abhängigen Ansprüchen angegeben.

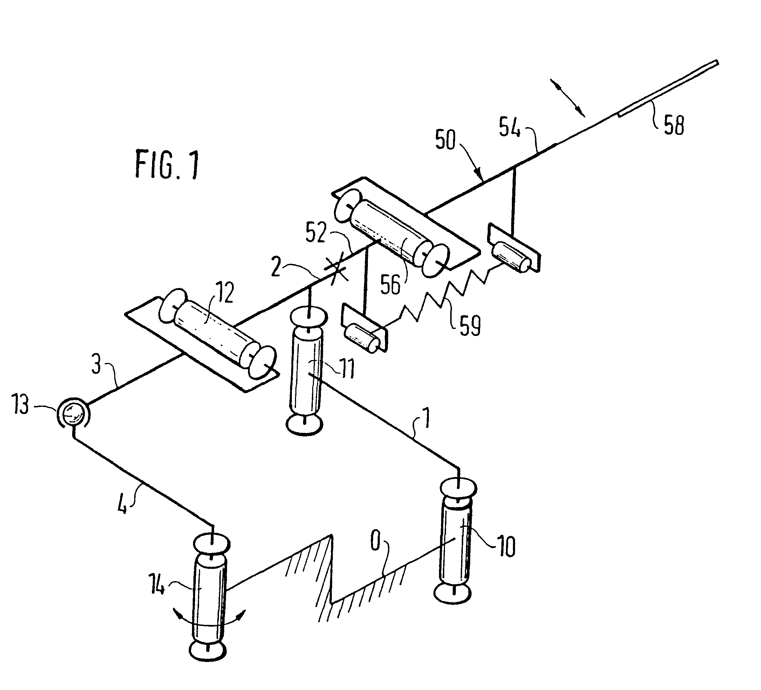

Der prinzipielle Aufbau des Fünfgelenks und der Wischvorrichtung ist in Figur 1 der Zeichnung dargestellt. Es hat ein an einer Karosserie befestigtes, gehäuseartiges Gestell 0, einen Schwinghebel 4, der mit dem Gestell 0 über eine Zapfenlagerung 14 verbunden ist und der durch einen Getriebemotor und ein als Schubkurbelgetriebe ausgebildetes Pendelgetriebe oder unmittelbar durch einen geeigneten Getriebemotor in eine Pendelbewegung versetzt wird. Weiter hat das Fünfgelenk eine Koppelstange 3, die mit dem Schwinghebel 4 über ein Gelenk 13 verbunden ist. Eine Stützkoppel 2 des Fünfgelenks ist fest mit dem Wischerarm 50 verbunden. Die Stützkoppel 2 ist mit der Koppelstange 3 über ein Gelenk 12 verbunden. Eine Schwinge 1, die einerseits mit der Stützkoppel 2 über ein Gelenk 11 und andererseits mit dem Gestell 0 über ein Gelenk 10 verbunden ist, gehört ebenfalls zu dem Fünfgelenk. Dabei können die Achsen der beiden Zapfengelenke 10, 11 des Getriebeglieds 1 so angeordnet sein, daß sie sich, aus einer bestimmten Richtung betrachtet, schneiden.

Die Gelenkverbindungen können in folgender Weise ausgebildet sein:

a) Gemäß einer ersten Ausgestaltung ist die Koppelstange 3 über ein Kugelgelenk 13 mit dem Schwinghebel 4 und durch ein Zapfengelenk 12 mit der Stützkoppel 2 verbunden, dergestalt, daß die Achse dieses Zapfengelenks 12 quer, insbesondere senkrecht oder weitgehend senkrecht zur Achse des Zapfengelenks 11 zwischen Stützkoppel 2 und Schwinge 1 steht.

b) In einer anderen Ausführungsform ist die Koppelstange 3 über ein Kugelgelenk 12 mit der Stützkoppel 2 und durch ein Zapfengelenk 13 mit dem Schwinghebel 4 verbunden, dergestalt, daß die Achse dieses Zapfengelenks 13 quer und insbesondere senkrecht oder weitgehend senkrecht zur Achse des Zapfengelenks 14 zwischen Schwinghebel 4 und Gestell 0 steht.

Das so konzipierte System ermöglicht es, die relative Schräglage der Achsen der Zapfengelenke 10, 11 (mit Ausnahme der oben unter a) und b) erwähnten Zapfengelenke) frei zu wählen. Es ermöglicht darüber hinaus, mittels der die Stützkoppel 2 und der Schwinge 1 konstituierenden, sehr kurzen offenen Kette, die aus der Anpreßkraft des Wischblatts auf die Windschutzscheibe und die aus dem größten Teil der Massenkräfte resultierenden Kräfte auf das Gestell zu übertragen.

Das System ermöglicht es darüber hinaus, durch eine geeignete Wahl der relativen Schräglage der Achsen der beiden Zapfengelenke der Schwinge 1, die Größe der Anpreßkraft des Wischblatts auf die Windschutzscheibe periodisch variieren zu lassen und somit das Abheben des Wischblatts dort zu vermeiden, wo es sonst erfolgen würde. Die zu empfehlenden Werte der relativen Schräglage der beiden betreffenden Achsen liegen zwischen 15 Grad und 45 Grad.

Wenn man darauf verzichtet, die Größe der Anpreßkraft periodisch variieren zu lassen und wenn die Achsen aller Gelenke mit Ausnahme eines einzigen (desjenigen zwischen der Stützkoppel 2 und der Koppelstange 3 im oben beschriebenen Falle a) oder desjenigen zwischen der Koppelstange 3 und dem Schwinghebel 4 im oben beschriebenen Falle b) parallel eingestellt werden, kann man das Kugelgelenk durch ein Zapfengelenk ersetzen, dessen Achse zu den Achsen aller anderen Zapfengelenke parallel eingestellt wird. Zusätzlich kann man das aufrechterhaltene, schräge Zapfengelenk durch eine beschränkt verformbare Verbindung, beispielsweise durch einen Silentblock, ersetzen.

Besonders interessant ist die Erfindung im Falle einer Zweihebel-Wischanlage. In diesem Fall ist der eine Wischerarm mit der Stützstange eines der Erfindung gemäßen Fünfgelenks fest verbunden, während der andere Wischerarm um eine gegenüber der Karosserie feststehende Achse in eine Pendelbewegung versetzt werden kann. Es ist auch denkbar, den Wischerarm mit der Stützkoppel 2 eines weiteren Fünfgelenks fest zu verbinden. Unabhängig von der zwischen diesen zwei Möglichkeiten getroffenen Wahl sind die Bewegungen der Wischerarme miteinander koordiniert und gleichgerichtet.

Wenn ein einziger Wischerarm gemäß der Erfindung geführt und angetrieben wird, ist die Pendelbewegung der Schwinge 4 im Fünfgelenk der erfindungsgemäßen Wischvorrichtung mit der Pendelbewegung des anderen Wischerarms koordiniert und diese beiden Bewegungen sind einander entgegengerichtet.

Wenn die beiden Wischerarme gemäß der Erfindung geführt und angetrieben werden, sind die Pendelbewegungen der beiden angetriebenen Schwinghebel 4 miteinander koordiniert und gleichgerichtet. Wenn die beiden, die Wischerarme führenden und antreibenden Fünfgelenke in der Nähe der Symmetrieebene der Windschutzscheibe gelagert sind, haben beide Fünfgelenke logischerweise ein gemeinsames Gestell 0.

Die Gelenke 14 zwischen Gestell 0 und Schwinghebel 4 können eine gemeinsame Achse haben und es ist in besonderen Fällen möglich, einen einzigen, beiden Fünfgelenken zugeordneten, gemeinsamen Schwinghebel 4 zu benutzen.

In diesen besonderen Fällen ist es oft vorteilhaft, den Wischwinkel der beiden Scheibenwischer auf den Minimalwert zu reduzieren, der eine Überlappung der beiden Wischfelder gerade noch ermöglicht. Dies bringt gewöhnlich mit sich, daß die beiden Wischerarme in der Endstellung weitgehend senkrecht zueinander stehen: Um den in der Nähe der Windschutzscheibenmitte stehengebliebenen Scheibenwischer in seine normale Parkstellung zu überführen, kann man die Gelenkachse der betreffenden Schwinge in dem Gestell verlagern, was bewerkstelligt werden kann, indem man die Achse in einer Exzenterbuchse lagert, die ihrerseits in dem Gestell 0 drehbar in einer Lageraufnahme geführt ist und die mittels eines unabhängigen Aktuators verdreht werden kann.

Ob die Wischanlage gemäß der Erfindung einen einzigen gemäß der Erfindung geführten und angetriebenen Wischerarm umfaßt oder zwei derartige Wischerarme aufweist, welche Pendelbewegungen des Schwinghebels und die Pendelbewegungen des um die ortsfeste Achse bewegten Scheibenwischers bzw. die Pendelbewegungen der beiden Schwinghebel ausführen, können diese Pendelbewegungen, ausgehend von einem klassischen Getriebemotor mittels eines Schubkurbelgetriebes erzeugt werden, das innerhalb der Karosserie untergebracht ist.

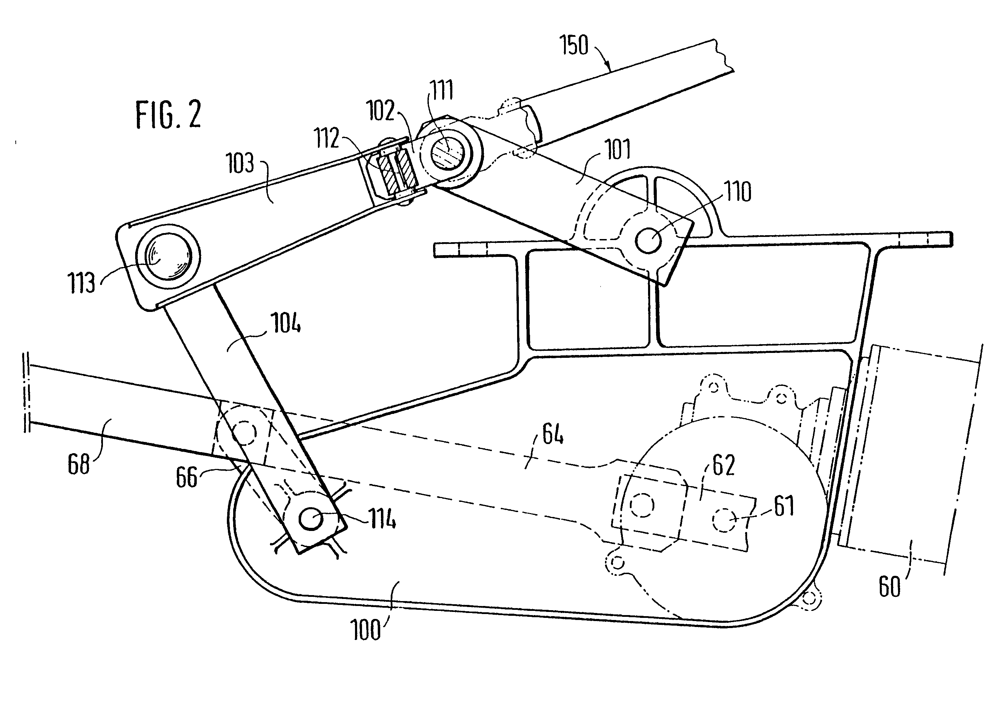

In der einfachsten Ausführung sind die beweglichen Elemente dieses Pendelgetriebes lediglich eine Kurbel 62 (Figur 2) und eine Schubstange 64.

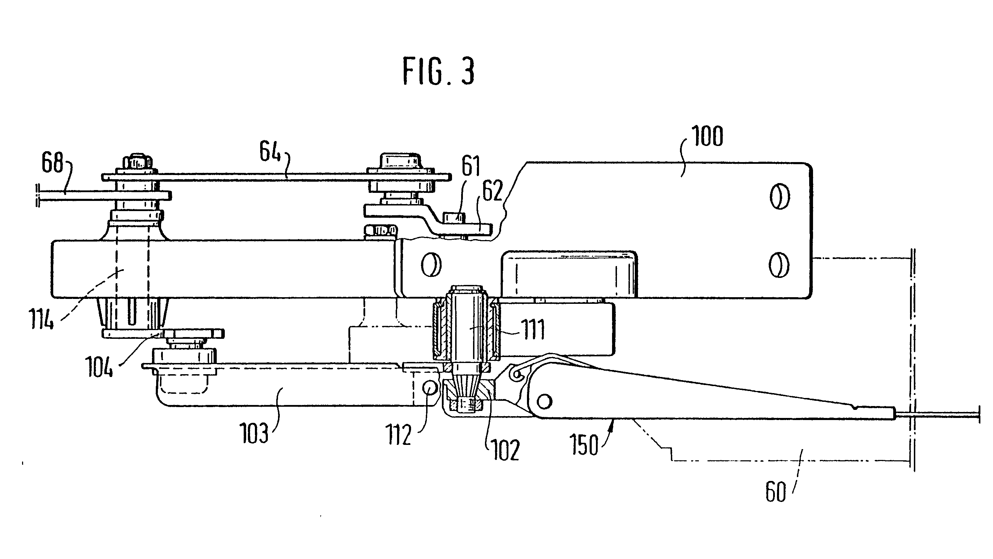

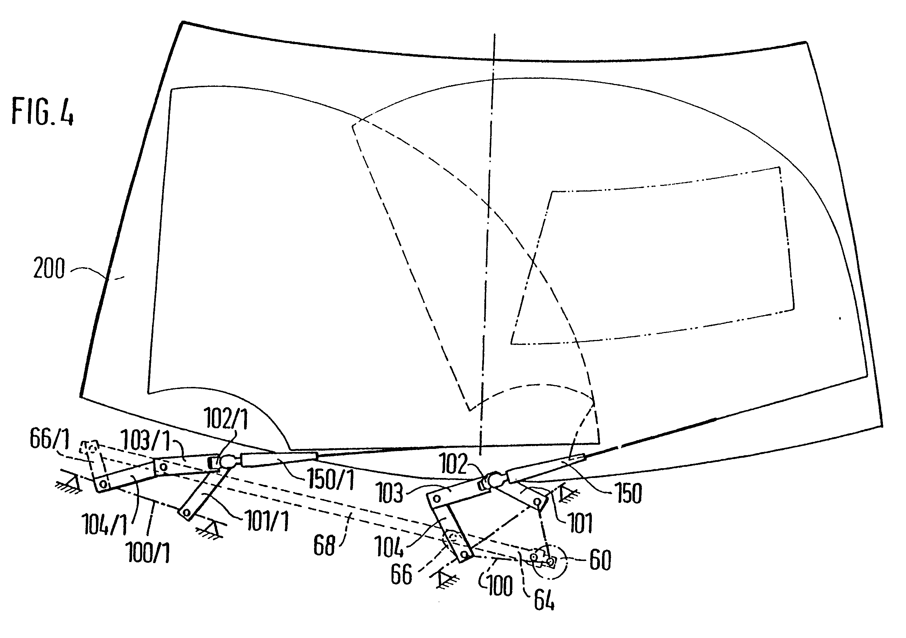

Die Figuren 2 und 3 zeigen die erfindungsgemäße Fünfgelenkanordnung in Ansicht und in Draufsicht, während die Figur 4 die schematische Darstellung einer gemäß der Erfindung aufgebauten Zweihebel-Wischanlage darstellt.

Zu der eingangs geschilderten Prinzipdarstellung gemäß Figur 1 ist noch zu sagen, daß der Wischerarm 50 aus zwei Teilen 52 und 54 besteht, die über ein Gelenk 56 miteinander verbunden sind. Am freien, vom Gelenk 56 abgewandten Ende weist das Wischerarmteil 54 ein Wischblatt 58 auf, das durch eine vorgespannte Feder 59, welche das Gelenk 56 übergreifend an beiden Wischerarmteilen 52 und 54 befestigt ist, das Wischblatt 58 gegen die zu wischende Scheibe 200 (Figur 4) spannt.

Bei der Anordnung gemäß den Figuren 2, 3 und 4 sind die Bauteile, welche den in Figur 1 schematisch wiedergegebenen Elementen entsprechen, mit einer Bezugszahl versehen, die um die Zahl 100 größer ist als die in Figur 1 verwendete Zahl. Es sind also in Figur 4 die Wischerarme 150 bzw. 150/1 mit den Stützkoppeln 102 bzw. 102/1 fest verbunden. Diese Stützkoppeln 102 bzw. 102/1 sind einerseits mit den Koppelstangen 103 bzw. 103/1 andererseits mit den Schwingen 101 bzw. 101/1 über Zapfenlager gelenkig verbunden. Die Koppelstangen 103 bzw. 103/1 sind mit den Schwinghebeln 104 bzw. 104/1 durch Kugelgelenke verbunden, während die Schwingen 101 bzw. 101/1 sowie die Schwinghebel 104 bzw. 104/1 mit dem an der Fahrzeugkarosserie befestigten Gestell 100 bzw. 100/1 durch Zapfengelenke verbunden sind. Der Schwinghebel 104 ist mit einer zum Lager 114 gehörenden Welle fest verbunden. Auf dieser Welle ist der Schwingarm 66 befestigt, der durch die Schubstange 64 in eine Pendelbewegung versetzt wird. Die Schubstange 64 wird durch die auf der Antriebswelle 61 eines Getriebemotors 60 befestigten Kurbel 62 angetrieben. Der Schwinghebel 104/1 ist mit einer Welle 114/1 verbunden, an der ein Schwingarm 66/1 befestigt ist, welche durch die Koppelstange 68 in eine Pendelbewegung versetzt wird. Die Koppelstange 68 wird vom Schwingarm 66 so angetrieben, daß die Bewegung der Schwingarme 66 und 66/1 gleichgerichtet sind.

Bei dem soeben geschilderten Beispiel steht das untere Ende des Wischerarmes 150/1 in einem relativ großen Abstand zur Symmetrieebene der Windschutzscheibe: Die Tendenz dieses Wischerarmes zum Abheben kann bekämpft werden, indem man die Achsen der Gelenke der Schwingen dergestalt schrägstellt, daß die Anpreßkraft des Wischblatts 58 auf die Windschutzscheibe 200 (Figur 4) mit der Winkelstellung des Wischhebels variiert.

## Patentansprüche

1. Wischvorrichtung für Scheiben von Fahrzeugen, mit wenigstens einem, ein Wischblatt tragenden Wischerarm, der an einem, als Stützkoppel (2) ausgebildeten Getriebeglied eines räumlichen, aus fünf miteinander gelenkig verbundenen Getriebegliedern bestehenden Mechanismus ausgebildeten, einen Freiheitsgrad F = 1 aufweisenden Fünfgelenks befestigt ist, wobei der Stützkoppel (2) weitere vier Getriebeglieder, nämlich ein karosseriefestes Gestell (0), eine Schwinge (1), eine mit der Stützkoppel (2) gelenkig verbundene Koppelstange (3) sowie ein von einem Antriebsaggregat pendelnd angetriebener Schwinghebel (4) zugeordnet sind, wobei die Achse des als Zapfengelenk ausgebildeten Gelenks (10) zwischen dem Gestell (0) und der Schwinge (1) mit Abstand von der Achse des Gelenks (14) zwischen dem Gestell (0) und dem Schwinghebel (4) an der Karosserie angeordnet ist.

2. Wischvorrichtung nach Anspruch 1, dadurch gekennzeichnet, daß das Gelenk (13) zwischen der Koppelstange (3) und dem Schwinghebel (4) ein Kugelgelenk ist, daß das Gelenk (11) zwischen der Schwinge (1) und der Stützkoppel (2) ein Zapfengelenk ist, und daß das Gelenk (12) zwischen der Stützkoppel (2) und der Koppelstange (3) ein Zapfengelenk ist, deren Achse gegenüber der Achse des Zapfengelenks (11) zwischen der Schwinge (11) und der Stützkoppel (2) schräg angeordnet ist.

3. Wischvorrichtung nach Anspruch 1, dadurch gekennzeichnet, daß das Gelenk (12) zwischen der Stützkoppel (2) und der Koppelstange (3) ein Kugelgelenk ist, daß das Gelenk (11) zwischen der Schwinge (1) und der Stützkoppel (2) ein Zapfengelenk ist, und daß das Gelenk (13) zwischen der Koppelstange (3) und dem Schwinghebel (4) ein Zapfengelenk ist, dessen Achse gegenüber der Achse des Zapfengelenks (14) zwischen dem Schwinghebel (4) und dem Gestell (0) schräg angeordnet ist.

4. Wischvorrichtung nach Anspruch 1, dadurch gekennzeichnet, daß alle Gelenke als Zapfengelenke ausgebildet sind, daß die Achsen der Zapfengelenke (10, 11, 13, 14) zwischen dem Gestell (0) und der Schwinge (1), zwischen der Schwinge (1) und der Stützkoppel (2), zwischen der Koppelstange (3) und dem Schwinghebel (4) sowie zwischen dem Schwinghebel (4) und dem Gestell (0) im wesentlichen parallel zueinander sind, und daß die Achsen des Zapfengelenks (12) zwischen der Stützkoppel (2) und der Koppelstange (3) gegenüber den Achsen der anderen Gelenke schräg angeordnet ist.

5. Wischvorrichtung nach Anspruch 1, dadurch gekennzeichnet, daß alle Gelenke als Zapfengelenke ausgebildet sind, daß die Achsen der Zapfengelenke (10, 11, 12, 14) zwischen dem Gestell (0) und der Schwinge (1), zwischen der Schwinge (1) und der Stützkoppel (2) zwischen der Stützkoppel (2) und der Koppelstange (3) sowie zwischen dem Schwinghebel (4) und dem Gestell (0) im wesentlichen parallel zueinander sind und die Achse des Zapfengelenks (13) zwischen dem Schwinghebel (4) und der Koppelstange (3) gegenüber der Achsen der anderen Gelenke schräg angeordnet sind.

6. Wischvorrichtung nach Ansprüchen 1, 2 und 3, dadurch gekennzeichnet, daß die Achsen der beiden Zapfengelenke (10, 11) der Schwinge (1) zueinander schräg angeordnet sind.

7. Wischvorrichtung nach einem der Ansprüche 4 oder 5, dadurch gekennzeichnet, daß das eine Gelenk, dessen Gelenkachse zu den Achsen der anderen Gelenke schräg verläuft, durch ein unter wachsender Spannung verformbares Verbindungselement gebildet ist.

8. Wischvorrichtung nach einem der Ansprüche 1 bis 7, dadurch gekennzeichnet, daß sie einen zweiten ein Wischblatt tragenden Wischerarm aufweist.

9. Wischvorrichtung nach Anspruch 8, dadurch gekennzeichnet, daß dem zweiten Wischerarm ein, dem ersten Fünfgelenk entsprechendes zweites räumliches Fünfgelenk zugeordnet ist, daß der zweite Wischerarm an der Stützkoppel (102/1) des zweiten Fünfgelenks befestigt ist, wobei die Bewegungen der beiden Schwinghebel (104 und 104/1) koordiniert und gleichgerichtet sind.

10. Wischvorrichtung nach Anspruch 9, dadurch gekennzeichnet, daß die beiden Fünfgelenke ein gemeinsames Gestell (100 und 100/1) haben, und daß die beiden Gelenke zwischen diesem Gestell und den beiden Schwinghebel (104 und 104/1) eine gemeinsame Achse aufweisen.

11. Wischvorrichtung nach Anspruch 10, dadurch gekennzeichnet, daß die beiden Fünfgelenke einen einzigen gemeinsamen Schwinghebel (4) aufweisen.

12. Wischvorrichtung nach Anspruch 11, dadurch gekennzeichnet, daß eine der Schwingen (101 bzw. 101/1) in einer Exzenterbuchse gelagert ist, die drehbar in einer Lageraufnahme des Gestells (0) geführt ist und die mittels eines unabhängigen Aktuators drehend betätigt wird.

13. Wischvorrichtung nach Anspruch 8, dadurch gekennzeichnet, daß der eine der beiden Wischerarme um eine gestellfeste Achse pendelt und daß der Schwinghebel (104) des Fünfgelenks und der um die gestellfeste Achse pendelnde Wischerarm zueinander koordinierte Pendelbewegungen ausführen.

14. Wischvorrichtung nach einem der Ansprüche 1 bis 7, dadurch gekennzeichnet, daß die Wischvorrichtung einen einzigen Wischerarm aufweist.

## Claims

1. Wiping apparatus for windscreens of vehicles, having at least one wiper arm, which bears a wiping blade and is fastened to a gear member, designed as a supporting coupler (2), of a three-dimensional five-link arrangement designed as a mechanism consisting of five gear members interconnected in an articulated manner and having one degree of freedom F = 1, the supporting coupler (2) having four further gear members, namely a frame (0), fixed to the vehicle body, a rocker (1), a coupling rod (3), connected in an articulated manner to the supporting coupler (2), and a rocker arm (4), driven in an oscillating manner by a drive unit, the axis of the link (10), designed as a pin joint, being arranged on the vehicle body between the frame (0) and the rocker (1) at a distance from the axis of the link (14) between the frame (0) and the rocker arm (4).

2. Wiping apparatus according to Claim 1, characterised in that the link (13) between the coupling rod (3) and the rocker arm (4) is a ball joint, in that the link (11) between the rocker (1) and the supporting coupler (2) is a pin joint, and in that the link (12) between the supporting coupler (2) and the coupling rod (3) is a pin joint, the axis of which is arranged obliquely to the axis of the pin joint (11) between the rocker (11) and the supporting coupler (2).

3. Wiping apparatus according to Claim 1, characterised in that the link (12) between the supporting coupler (2) and the coupling rod (3) is a ball joint, in that the link (11) between the rocker (1) and the supporting coupler (2) is a pin joint, and in that the link (13) between the coupling rod (3) and the rocker arm (4) is a pin joint, the axis of which is arranged obliquely to the axis of the pin joint (14) between the rocker arm (4) and the frame (0).

4. Wiping apparatus according to Claim 1, characterised in that all links are designed as pin joints, in that the axes of the pin joints (10, 11, 13, 14) between the frame (0) and the rocker (1), between the rocker (1) and the supporting coupler (2), between the coupling rod (3) and the rocker arm (4) as well as between the rocker arm (4) and the frame (0) are substantially parallel to one another, and in that the axis of the pin joint (12) between the supporting coupler (2) and the coupling rod (3) is arranged obliquely to the axes of the other links.

5. Wiping apparatus according to Claim 1, characterised in that all links are designed as pin joints, in that the axes of the pin joints (10, 11, 12, 14) between the frame (0) and the rocker (1), between the rocker (1) and the supporting coupler (2), between the supporting coupler (2) and the coupling rod (3) as well as between the rocker arm (4) and the frame (0) are substantially parallel to one another and the axis of the pin joint (13) between the rocker arm (4) and the coupling rod (3) is arranged obliquely to the axes of the other links.

6. Wiping apparatus according to Claims 1, 2 and 3, characterised in that the axes of the two pin joints (10, 11) of the rocker (1) are arranged obliquely to each other.

7. Wiping apparatus according to one of the Claims 4 or 5, characterised in that the one link, the link axis of which runs obliquely to the axes of the other links, is formed by a connecting element which is deformable under increasing stress.

8. Wiping apparatus according to one of the Claims 1 to 7, characterised in that it has a second wiper arm, bearing a wiping blade.

9. Wiping apparatus according to Claim 8, characterised in that the second wiper arm is assigned a second threedimensional five-link arrangement corresponding to the first five-link arrangement, in that the second wiper arm is fastened to the supporting coupler (102/1) of the second five-link arrangement, the movements of the two rocker arms (104 and 104/1) being coordinated and codirected.

10. Wiping apparatus according to Claim 9, characterised in that the two five-link arrangements have a common frame (100 and 100/1), and in that the two links between this frame and the two rocker arms (104 and 104/1) have a common axis.

11. Wiping apparatus according to Claim 10, characterised in that the two five-link arrangements have a single common rocker lever (4).

12. Wiping apparatus according to Claim 11, characterised in that one of the rockers (101 or 101/1) is mounted in an eccentric bush, which is guided rotatably in a bearing receptacle of the frame (0) and which is rotatably operated by means of an independent actuator.

13. Wiping apparatus according to Claim 8, characterised in that the one of the two wiper arms oscillates about an axis fixed with respect to the frame and in that the rocker arm (104) of the five-link arrangement and the wiper arm oscillating about the axis fixed with respect to the frame execute mutually coordinated oscillating movements.

14. Wiping apparatus according to one of Claims 1 to 7, characterised in that the wiping arrangement has a single wiper arm.

**Revendications**

1. Dispositif pour essuyer les glaces d'automobile avec au moins un bras d'essuie-glace portant une raclette d'essuie-glace et qui est fixée à un organe de transmission revêtant la forme d'un couplage de soutien (2) d'un mécanisme d'une articulation quintuple ayant un degré de liberté F = 1 constitué de cinq organes de transmission reliés ensemble par articulation, quatre autres organes de transmission, à savoir une monture (0) solidaire de la carrosserie, une bielle oscillante (1), une tige de couplage (3) reliée par articulation au couplage de soutien (2) ainsi qu'un levier oscillant (4) entraîné d'un mouvement pendulaire par un équipement d'entraînement, étant associés au couplage de soutien (2), l'axe de l'articulation (10) revêtant la forme d'une articulation à pivot étant disposé sur la carrosserie entre la monture (0) et la bielle oscillante (1) à une certaine distance de l'axe de l'articulation (14) entre la monture (0) et le levier oscillant (4).

2. Dispositif d'essuyage selon la revendication 1, caractérisé en ce que l'articulation (13) entre la tige de couplage (3) et le levier oscillant (4) est une articulation à rotule, l'articulation (11) entre la bielle oscillante (1) et le couplage de soutien (2) étant une articulation à pivot, et l'articulation (12) entre le couplage de soutien (2) et la tige de couplage (3) étant une articulation à pivot dont l'axe est disposé obliquement par rapport à l'axe de l'articulation à pivot (11) entre la bielle oscillante (1) et le couplage de soutien (2).

3. Dispositif d'essuyage selon la revendication 1, caractérisé en ce que l'articulation (12) entre le couplage de soutien (2) et la tige de couplage (3) est une articulation à rotule, l'articulation (11) entre la bielle oscillante (1) et le couplage de soutien (2) étant une articulation à pivot, et l'articulation (13) entre la tige de couplage (3) et le levier oscillant (4) étant une articulation à pivot, dont l'axe est disposé obliquement par rapport à l'axe de l'articulation à pivot (14) entre le levier oscillant (4) et la monture (0).

4. Dispositif d'essuyage selon la revendication 1, caractérisé en ce que toutes les articulations sont réalisées sous la forme d'articulations à pivots, les axes des articulations à pivots (10, 11, 13, 14) entre la monture (0) et la bielle oscillante (1), entre la bielle oscillante (1) et le couplage de soutien (2), entre la tige de couplage (3) et le levier oscillant (4), ainsi qu'entre le levier oscillant (4) et la monture (0) étant essentiellement parallèles entre eux, et l'axe de l'articulation à pivot (12) entre le couplage de soutien (2) et la tige de couplage (3) étant disposé obliquement par rapport aux axes des autres articulations.

5. Dispositif d'essuyage selon la revendication 1, caractérisé en ce que toutes les articulations sont réalisées sous la forme d'articulations à pivots, les axes des articulations à pivots (10, 11, 12, 14) entre la monture (0) et la bielle oscillante (1), entre la bielle oscillante (1) et le couplage de soutien (2), entre le couplage de soutien (2) et la tige de couplage (3), ainsi qu'entre le levier oscillant (4) et la monture (0) étant en principe parallèles entre eux, tandis que l'axe de l'articulation à pivot (13) entre le levier oscillant (4) et la tige de couplage (3) est disposé obliquement par rapport aux axes des autres articulations.

6. Dispositif d'essuyage selon les revendications 1, 2 et 3 caractérisé en ce que les axes des deux articulations à pivots (10, 11) de la bielle oscillante (1) sont disposés obliquement l'un par rapport à l'autre.

7. Dispositif d'essuyage selon une des revendications 4 ou 5, caractérisé en ce que l'une des articulations dont l'axe d'articulation est oblique par rapport aux axes des autres articulations, est constituée par un élément de liaison déformable sous une contrainte croissante.

8. Dispositif d'essuyage selon une des revendications 1 à 7, caractérisé en ce qu'il comporte un deuxième bras d'essuie-glace portant une raclette d'essuie-glace.

9. Dispositif d'essuyage selon la revendication 8, caractérisé en ce que au, deuxième bras d'essuie-glace est associée une seconde articulation quintuple correspondant à la première articulation quintuple, le second bras d'essuie-glace étant fixé sur le couplage de soutien (102/1) de la seconde articulation quintuple, et les mouvements des deux leviers oscillants (104 et 104/1) étant coordonnés et dans le même sens.

10. Dispositif d'essuyage selon la revendication 9, caractérisé en ce que les deux articulations quintuples ont une monture commune (100 et 100/1), et que ces deux articulations comportent un axe commun entre cette monture et les deux leviers oscillants (104 et 104/1).

11. Dispositif d'essuyage selon la revendication 10, caractérisé en ce que les deux articulations quintuples comportent un levier oscillant unique commun (4).

12. Dispositif d'essuyage selon la revendication 11, caractérisé en ce que l'une des bielles oscillantes (101 ou bien 101/1) est montée dans une douille excentrée, qui est guidée de façon à pouvoir tourner dans un logement de palier de la monture (0) et qui tourne grâce à un moyen d'actionnement indépendant.

13. Dispositif d'essuyage selon la revendication 8, caractérisé en ce que l'un des deux bras d'essuie-glace oscille autour d'un axe fixe par rapport à la monture, le levier oscillant (104) de l'articulation quintuple et le bras d'essuie-glace oscillant autour de cet axe fixe par rapport à la monture, accomplissant des mouvements pendulaires coordonnés l'un par rapport à l'autre.

14. Dispositif d'essuyage selon une des revendications 1 à 7, caractérisé en ce que ce dispositif d'essuyage comporte un unique bras d'essuie-glace.

FIG. 1

FIG. 2

EP 0 182 123 B1

FIG. 3

FIG.4

EP 0 182 123 B1